# EUROPÄISCHE PATENTSCHRIFT

(11) **EP 3 167 528 B1**
(45) Veröffentlichungstag und Bekanntmachung des Hinweises auf die Patenterteilung: **24.01.2018**
(21) Anmeldenummer: 15744119.7
(22) Anmeldetag: 07.07.2015
(51) Int. Cl.: H02J 3/46, H02J 3/38, H02J 13/00, H02J 3/28

(54) **SYSTEM UND VERFAHREN ZUM BESTIMMEN DER EIGNUNG MEHRERER ELEKTRISCHER PRODUZENTEN UND VERBRAUCHER, DIE IN EINEM NETZWERK ALS VIRTUELLES KRAFTWERK BETRIEBEN WERDEN, FÜR DIE ERBRINGUNG VON REGELLEISTUNG**
SYSTEM AND METHOD FOR DETERMINING THE SUITABILITY OF A PLURALITY OF ELECTRICAL PRODUCERS AND CONSUMERS WHICH ARE OPERATED IN A NETWORK AS A VIRTUAL POWER PLANT FOR PROVIDING CONTROL POWER
SYSTÈME ET PROCÉDÉ POUR DÉTERMINER L'APTITUDE DE PLUSIEURS PRODUCTEURS ET CONSOMMATEURS ÉLECTRIQUES FONCTIONNANT DANS UN RÉSEAU EN TANT QUE CENTRALE ÉLECTRIQUE VIRTUELLE, AFIN DE FOURNIR UNE PUISSANCE DE REGULATION

(30) Priorität: 07.07.2014 DE 102014009953
(43) Veröffentlichungstag der Anmeldung: 17.05.2017
(73) Patentinhaber: Lichtblick SE, 20359 Hamburg (DE)
(72) Erfinder: STORACE, Stefan, 20359 Hamburg (DE); SCHLUTTER, Jörg, 20359 Hamburg (DE); RUMMENIE, Martin, 20359 Hamburg (DE); ANGENENDT, Hendrik, 20359 Hamburg (DE)
(74) Vertreter: Eisenführ Speiser
(86) Internationale Anmeldenummer: PCT/EP2015/001378
(87) Internationale Veröffentlichungsnummer: WO 2016/005048

(56) Entgegenhaltungen:
- WO-A1-2012/168323
- DE-A1-102011 055 227
- US-A1- 2012 029 897

## Beschreibung

Die Erfindung betrifft ein System und ein Verfahren, um zeitaktuell die Eignung technischer Einheiten eines virtuellen Kraftwerks zum Erbringen von positiver oder negativer Regelleistung, insbesondere Sekundäregelleistung, zu bestimmen. Die technischen Einheiten werden als virtuelles Kraftwerk betrieben, d.h. dass sie zum Erzeugen und/oder Speichern und/oder Verbrauchen elektrischer Energie örtlich dezentral verteilt sind und zum Einspeisen oder Entnehmen elektrischer Energie an ein Stromversorgungsnetz angeschlossen sind und zum Steuern des Betriebs über eine Kommunikationsverbindung mit einer Steuerzentrale verbunden sind. Die Erfindung kann auch in anderen Anwendungsgebieten sinnvoll nutzbar sein, z.B. bei der Erbringung von Minutenreserveleistung.

Bekanntlich speisen Kraftwerke zur Energieversorgung elektrische Energie in Versorgungsnetzwerke ein, an die örtlich verteilte Verbraucher angeschlossen sind. Hierbei hat in den letzten Jahren der Grad der Kleinteiligkeit und Dezentralität sehr stark zugenommen: es werden nicht mehr nur zentrale, vom Ort des Energieverbrauchs unabhängige Kraftwerke betrieben, sondern es kommen immer mehr technische Einheiten hinzu, welche lokal bei den Verbrauchern angesiedelt sind und elektrische Energie einerseits ins Netz einspeisen und andererseits aus diesem entnehmen. Dies können zum Beispiel Solarzellen sein, die den Verbraucher mit Strom versorgen und dann überschüssigen Strom entweder lokal in Batterien speichern oder in das Versorgungsnetz einspeisen, aber auch lokale Biogasanlagen oder Generatoren, die zum Beispiel mit Diesel oder Gas betrieben werden und auch der Wärmeversorgung dienen (zum Beispiel Blockheizkraftwerke).

Eine Möglichkeit, diese dezentralen elektrischen Einheiten wirtschaftlich zu betreiben, stellt eine Organisationsform dar, die oftmals (und im Folgenden) als "virtuelles Kraftwerk" bezeichnet wird: Die Intelligenz des virtuellen Kraftwerks steuert die elektrischen Einheiten im Rahmen vorhandener Freiheitsgrade. Hierbei müssen gewisse Restriktionen der Einheiten berücksichtigt werden (z.B. Sicherstellung der Wärmeversorgung bei Blockheizkraftwerken). Unter anderem zu diesem Zweck sind die elektrischen Einheiten kommunikativ über eine Kommunikationsverbindung wie z.B. eine Datenleitung mit einer Steuerzentrale verbunden. Als elektrische Einheiten im vorliegenden Zusammenhang kommen (wie zum Teil schon erwähnt) zum Beispiel Blockheizkraftwerke, Photovoltaikanlagen, Batterien (auch mobil montierte Batterien zum Beispiel in elektrisch angetriebenen Fahrzeugen, die zum Beispiel zum Laden lokal angeschlossen sind), Wärmepumpen, Nachtspeicheröfen, Windkraftanlagen oder Notstromaggregate in Betracht. Um im virtuellen Kraftwerk Regelleistung zu erbringen, besteht ein Nachteil im Vergleich zum Großkraftwerk darin, eben auch die Regelenergie kleinteilig und örtlich verteilt bereitstellen (oder bei negativer Regelenergie zum Beispiel durch Speicherung abführen) zu müssen.

WO 2012/168323 A1 offenbart eine Steuereinheit für ein elektrisches Erzeugungs-/ Verbrauchssystem, einschließlich Erzeugungsquellen (200) und Verbrauchseinheiten (300), die durch ein Verteilungsnetzwerk (100) verbunden sind. Eine Steuerzentrale (400) überträgt die Modulationsaufträge zu steuerbaren Verbrauchseinheiten (310) und zu steuerbaren Erzeugungsquellen (210), wobei die Modulationsaufträge auf empfangen Warninformationen von einem externen Betreiber (500), auf Informationen über das Potential der jeweiligen Unterdrückung von Einheiten (310) und auf Informationen zu dem jeweiligen Erzeugungspotential oder einer Abnahme der Erzeugungsquellen (210) oder auf der Unterdrückung der letzteren basieren. Bei jeder Einheit (310) überträgt ein Modul (312) aktualisierten Daten in Echtzeit zur Zentrale (400), die mögliche Modulationsunterdrückung der Einheit (310) darstellen. Ein Modul (212) überträgt an das Steuerzentrum (400) Daten, die in Echtzeit aktualisiert werden und die repräsentativ sind für das Erzeugungspotential, die Erzeugungsabnahme der Quellen (210) oder der Unterdrückung der letzteren.

Der vorliegenden Erfindung liegt die Aufgabe zu Grunde, ein effizientes System und Verfahren zu schaffen, um im virtuellen Kraftwerk Regelleistung zu erbringen. Diese Aufgabe wird von einem System mit den Merkmalen des Anspruchs 1 und von einem Verfahren mit den Merkmalen des Anspruchs 6 gelöst. Bevorzugte Ausgestaltungen sind in den Unteransprüchen angegeben.

Das erfindungsgemäße System und Verfahren richten sich darauf, zeitaktuell die Eignung technischer Einheiten eines virtuellen Kraftwerks zum Erbringen von positiver oder negativer Regelleistung zu bestimmen. Die technischen Einheiten sind zur Erzeugung und/oder zur Speicherung und/oder zum Verbrauch elektrischer Energie örtlich verteilt. Zum Einspeisen oder Entnehmen elektrischer Energie sind die technischen Einheiten an ein Stromversorgungsnetz angeschlossen. Um den Betrieb zu steuern, sind die technischen Einheiten über eine Kommunikationsverbindung mit einer Steuerzentrale verbunden.

Erfindungsgemäß sendet in dem Verfahren ein Zustandssignalgeber bei jeder der technischen Einheiten in einem regelmäßigen (insbesondere konfigurierbaren, zum Beispiel 5-minütigen) Zeittakt und bei jedem Zustandswechsel der jeweiligen technischen Einheit ein Zustandssignal, das Information über den gegenwärtigen Zustand der technischen Einheit enthält (Keep-Alive-Signal) und den Zustandswechsel (Triggersignal) signalisiert, an die Steuerzentrale. Ein Rechner in der Steuerzentrale vergleicht dann gemäß den Zustandssignalen mindestens zwei der technischen Einheiten auf ihre Eignung zum Erbringen von positiver oder negativer Regelleistung. Er kann die technischen Einheiten dann abhängig vom Ergebnis des Vergleichs ansteuern.

Entsprechend weist das erfindungsgemäße System einen Zustandssignalgeber bei jeder der technischen Einheiten auf, der darauf eingerichtet ist, in einem regelmäßigen (insbesondere konfigurierbaren, zum Beispiel 5-minütigen) Zeittakt und bei jedem Zustandswechsel der jeweiligen technischen Einheit (z.B. zwischen einem Produktions- oder Verbrauchs-Leistungswert und Null oder zwischen einem solchen Leistungswert und einem anderen solchen Leistungswert) ein Zustandssignal, das den Zustandswechsel signalisiert und Information über den gegenwärtigen Zustand der technischen Einheit enthält, an die Steuerzentrale zu senden.

Ein Rechner in der Steuerzentrale, ist dann darauf eingerichtet, gemäß den Zustandssignalen mindestens zwei der technischen Einheiten auf ihre Eignung zum Erbringen von positiver oder negativer Regelleistung zu vergleichen und insbesondere auch abhängig vom Ergebnis des Vergleichs anzusteuern.

Beim Vergleich können ein oder mehrere Bewertungskriterien berücksichtigt werden. Bei Berücksichtigung mehrerer Bewertungskriterien können diese anhand einer Gewichtung unterschiedlich stark in die Bewertung einfließen.

Ziel ist also Ermittlung der technischen Einheit, zum Beispiel des BHKWs, welches sich "am besten" für das Zuschalten (bzw. für das Abschalten) eignet. Dieses Verfahren wurde entwickelt, um im Rahmen der Regelleistungs-Erbringung mit kleinteiligen Anlagen eine Systemlösung zu haben, welche die Qualität der Regelleitungs-Erbringung signifikant erhöht und dabei die Besonderheiten eines derartigen virtuellen Kraftwerks berücksichtigt. Die dafür verwendeten Daten sollen immer so aktuell wie möglich sein. Die Einstellungen für das Scoring sollen flexibel und kurzfristig änderbar sein (z.B. durch Manipulation von Datenbankeinträgen in einem Ansteuerungssystem der zentralen Steuerung, welche der Konfiguration des Scorings dienen), so dass Änderungen am Scoring (z.B. im Fall eines unerwarteten Verhaltens) ohne Software-Update möglich sind.

Diese und weitere Vorteile und Merkmale der Erfindung werden anhand der folgenden Abbildung eines Ausführungsbeispiels der Erfindung weiter beschrieben. Darin zeigt:

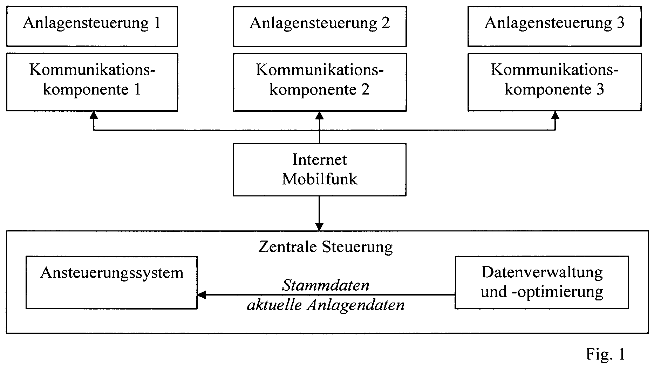

- Fig. 1: ein Schema eines erfindungsgemäßen Systems, in dem das erfindungsgemäße Verfahren abläuft.

Das Ausführungsbeispiel gemäß Fig. 1 beschreibt ein System für die Erbringung positiver Sekundärregelleistung durch Steuerung eines virtuellen Kraftwerks bestehend aus Blockheizkraftwerken.

Gemäß Fig. 1 gibt die Anlagensteuerung einer jeweiligen lokalen elektrischen Einheit (zum Beispiel BHKW 1 bis 3) über die jeweilige Kommunikationskomponente z.B. folgende für die Ermittlung der Score-Werte benötigten Daten weiter an die Steuerzentrale:
- Zeit,
- Betriebszustand
- Zählerdaten (z.B. vom BHKW in der letzten Viertelstunde geleistete Arbeit)
- Fehlerzustände
- Fühlertemperaturen der Wärmespeicher

Die Kommunikationskomponente ist das Verbindungsstück zwischen lokaler Anlagensteuerung und dem zentralen Steuerungssystem. Die Daten werden sowohl an die Datenverwaltung als auch an das Ansteuerungssystem geschickt.

Das Ansteuerungssystem dient der Ansteuerung und auch der Ermittlung der Score-Werte. Das Ansteuerungssystem holt sich regelmäßig aktuelle Daten aus dem Datenverwaltungssystem.

Die Datenverwaltung enthält Stamm- und dynamische Daten der Anlagen. Die Optimierung berechnet im Vorfeld eine optimierte Betriebsweise der Anlagen und greift dabei auf Stamm- und dynamische Daten zurück. Stammdaten sind z.B. die verbauten Wärmespeicher und deren Kapazität. Dynamische Daten sind z.B. Betriebszustände und Wärmeabnahme im Zeitverlauf.

Folgende möglicherweise beteiligte Komponenten können der Ermittlung des Scorewerts dienen:
Keep-Alive-Signal - Damit das Scoring immer aktuelle Daten hat, schickt jede technische Einheit des virtuellen Kraftwerks ein sogenanntes "Keep-Alive-Signal". Dieses wird (konfigurierbar) z.B. alle 5 Minuten geschickt. Darin enthalten sind z.B. Anlagenzustand (an, betriebsbereit, nicht betriebsbereit, ...) und Fühlertemperaturen der Wärmespeicher. Mit den Fühlertemperaturen kann man wiederum den Speicherstand eines BHKW, aber auch z.B. einer Nachtspeicherheizung errechnen.

Im System ist ein Kontrollmechanismus eingebaut, der die Keep-Alive-Signale überwacht und die Keep-Alive-Verbindung von seit längerer Zeit nicht sendenden Anlagen reaktiviert.

Zustandsdaten - Ändert das Blockkraftheizwerk seinen Zustand, schickt es die Zustandsdaten eventgesteuert, d.h. als spontane Signalübertragung bei einem bestimmten Ereignis an den Rechner in der Steuerzentrale.

Die Betriebssteuerung kann nun eine Soll-Leistung vorgegeben bekommen, die vom System eingehalten werden muss. Dafür müssen Analgen entweder eingeplant oder "ausgeplant" werden. Grundlage hierfür ist ein Delta zwischen Soll und Ist. Dabei kann das Delta entweder größer als Null (BHKW einschalten) oder kleiner als Null (BHKW abschalten) sein. Ist das Delta größer als Null, werden geeignete Anlagen aus dem Zuschalt-Scoring verwendet. Bei einem Delta kleiner als Null Anlagen aus dem Abschalt-Scoring.

Die Keep-Alive-Überwachung aktiviert das Senden der Keep-Alive-Signale, und zwar vorzugsweise nicht für alle Anlagen auf einmal, sondern versetzt in kleinen Intervallen, so dass ein zeitlich verteiltes und gleichmäßiges Eintreffen der Signale im System erreicht wird. Kommen neue Anlagen hinzu oder wird das System neu gestartet, soll die Keep-Alive-Überwachung zuerst die Anlagen aktivieren, die im Scoring ganz oben stehen, d.h. die für das Anschalten (bzw. Abschalten) am besten geeignet sind.

Das erfindungsgemäße Scoring kann auf der Analyse verschiedener Parameter der technischen Einheiten beruhen:
Dauer der letzten Taktung - Es wird die Dauer der letzten abgeschlossenen Taktung ermittelt, d.h. der zeitliche Abstand zwischen dem jüngsten Zustand, der unmittelbar auf einen Zustand "an" folgt, und dem unmittelbar vor diesem Zustand liegende Zustand "an".

Wärmespeicherstand der Anlage - Der Wärmespeicherstand einer Anlage wird über die Keep-Alive-Signale übermittelt. Diese beinhalten Temperaturwerte aus dem Speicher. Über die Kenntnis des vor Ort installierten Speichervolumens, die maximale und minimale Be-/Entladetemperatur lässt sich damit der aktuelle Speicherstand errechnen.

Berechnung der Speicherstandsabweichung und des Speicherbefüllungspotentials - Bei der Berechnung von Speicherstandsabweichung und Speicherbefüllungspotential werden vorzugsweise der geplante Speicherstandsverlauf, der tatsächliche Speicherstand und das Speicherpotential berücksichtigt.

Der geplante Speicherstandsverlauf wird zentral ermittelt. Der tatsächliche Speicherstand, der sich aus den Temperaturdaten der Fühler berechnen lässt, kann ebenfalls zentral für ein Gebäude ermittelt werden. Die Speicherstandsabweichung soll hingegen je technischer Einheit (z.B. Blockkraftheizwerk) ermittelt werden. Der Zeitpunkt t, der dann bei der Berechnung der Speicherstandsabweichung herangezogen wird, ist z.B. der Zeitpunkt der aktuellsten vorliegenden Temperaturdaten. Eine negative Speicherstandsabweichung (Wärmespeicherstand geringer als erwartet) spricht z.B. dafür, dass das ZHKW sich gut für die Erbringung zusätzlicher Leistung eignet, d.h. eine negative Speicherstandsabweichung führt zu einem tendenziell höheren Zuschalt-Scorewert.

Der geplante Speicherstandsverlauf liegt eher nicht als stetige Funktion vor, sondern in Form von Datenreihen (geplanter Speicherstand zu bestimmten Zeiten, z.B. im Viertelstundenraster). Daher muss der geplante Speicherstand zum Zeitpunkt t in der Regel geeignet aus den beiden "benachbarten" Werten berechnet werden.

Geplanter durchschnittlicher Wärmebedarf - Der geplante durchschnittliche Wärmebedarf pro Blockkraftheizwerk lässt sich wie folgt ermitteln: zunächst Ermittlung des aktuellen Stundenintervalls (z.B. 12-13 Uhr); dann Ermittlung des geplanten durchschnittlichen Wärmebedarfs (nach Wärmelastprognose): Dieser Wert berechnet sich dann als der durchschnittliche Bedarf dieses Intervalls und der zu berücksichtigenden Stunden davor (bestimmt durch Konfiguration "Anzahl vorgelagerte Stunden bei Wärmebedarfsermittlung") und der zu berücksichtigenden Stunden danach (bestimmt durch Konfiguration "Anzahl nachgelagerte Stunden bei Wärmebedarfsermittlung").

Ermittlung des Verbindungsstatus - Die Blockheizkraftwerke übermitteln in regelmäßigen Abständen kleine Datenpakete an das zentrale System, um dieses über den aktuellen Status zu informieren und die Kommunikation aufrecht zu erhalten. Bei Eingang dieser Kommunikation im zentralen System, wird der Verbindungsstatus des jeweiligen Blockheizkraftwerks auf "online" gesetzt. Bleibt die Kommunikation hingegen über eine definierte Zeitspanne aus, erhält das Blockheizkraftwerk den Verbindungsstatus "offline". Ebenso bekommt ein Blockheizkraftwerk den Status "offline", wenn der Versuch des zentralen Systems, einen Betriebsplan an ein Blockheizkraftwerk zu übermitteln, fehlschlägt.

Ermittlung der Anzahl der Verbindungsfehler - Es kann die Anzahl der Verbindungsfehler jedes Blockkraftheizwerkes in den letzten Stunden ermittelt werden. Die Anzahl der Stunden ist konfigurierbar. Verbindungsfehler können sein:
- direkte Fehler beim Senden von Betriebsplänen
- Time-Outs beim Senden von Betriebsplänen
- Time-Outs beim Keep-Alive-Signal

Ermittlung der durchschnittlichen Erreichbarkeit - Das zentrale System versucht in regelmäßigen Abständen, die Blockheizkraftwerke kommunikativ zu erreichen. Ein solcher Verbindungsversuch wird Ping genannt und kann erfolgreich oder nicht erfolgreich sein. Die Berechnung der durchschnittlichen Erreichbarkeit eines Blockheizkraftwerks erfolgt nach folgender Formel: durchschnittliche Erreichbarkeit = Anzahl erfolgreicher Pings der vorausgegangenen 7 Tage / Anzahl aller Pings der vorausgegangenen 7 Tage

Ziel ist es also insbesondere, zeitaktuell festzustellen, ob und/oder in welchem Maße die technischen Einheiten eines virtuellen Kraftwerks zum Erbringen von positiver oder negativer Sekundärregelleistung geeignet sind. Es kann insbesondere im Rechner der Steuerzentrale diesbezüglich also ein Ranking oder Scoring über die Eignung der technischen Einheiten insbesondere zeitaktuell bestimmt werden. Entsprechend lassen sie sich dann im Bedarfsfalle, Regelenergie zu erzeugen, in der Reihenfolge der Eignung ansteuern, bis der Bedarf gedeckt ist.

Beim Scoring für das Zuschalten von Leistung wird zwischen harten und weichen Kriterien unterschieden. Wird ein hartes Kriterium z.B. von einem BHKW nicht erfüllt, führt das dazu, dass das BHKW im Scoring als nicht verfügbar geführt wird und somit nicht zugeschaltet werden kann.

BHKW, die dann alle harten Kriterien erfüllen, werden nach den weichen Kriterien bewertet und sortiert. Hierbei soll ein Verfahren verwendet werden, das es erlaubt, die Gewichtung der Kriterien und die Bewertung innerhalb der Kriterien ohne ein Software-Update, sondern durch Manipulation von Datenbankeinträgen, welche der Konfiguration des Scorings dienen, zu verändern.

Es wird für jedes BHKW ein Scorewert berechnet, wobei ein hoher Scorewert grundsätzlich bedeutet, dass das BHKW momentan gut für das Zuschalten zur Erbringung von Sekundärregelleistung geeignet ist. Darüber hinaus kann durch das Kennzeichen "Reserve" konfiguriert werden, dass bestimmte Wertebereiche eines Kriteriums zum Quasi-Ausschluss dieses BHKW führen. Die BHKW aus dem "Reserve-Topf" werden erst dann berücksichtigt, wenn es keine zuschaltbaren BHKW im "Haupt-Topf" gibt. Innerhalb des Reserve-Topfes ist dann wiederum der Scorewert ausschlaggebend.

Es kann auch weitere Bedingungen für das Zuschalten geben:
Das Scoring wählt nacheinander BHKW aus, bis die Leistung der ausgewählten BHKW die Leistungsdifferenz erreicht (oder überschritten) hat. Es wird immer versucht, aus der Menge der BHKW aus dem Haupt-Topf (d.h. ZHKW, die nicht mit "Reserve" gekennzeichnet sind) das BHKW mit dem höchsten Scorewert auszuwählen, jedoch müssen die unten genannten Bedingungen verfüllt sein. Erst wenn alle BHKW aus dem Haupt-Topf geprüft wurden und die Differenz noch nicht erreicht wurde, werden die BHKW aus dem Reserve-Topf herangezogen. Diese werden dann wiederum in der Reihenfolge ihres Scorewerts berücksichtigt. Die Bedingungen für das Zuschalten müssen auch dann eingehalten werden. Bedingungen für das Zuschalten, die während der Ansteuerung geprüft werden, können sein:
   - Die Anlage ist zum aktuellen Zeitpunkt und innerhalb der nächsten Sekunden (konfigurierbar) für die Erbringung von Regelleistung reserviert.
   - Für die Anlage ist zum aktuellen Zeitpunkt und innerhalb der nächsten Sekunden (konfigurierbar) kein Betrieb vorgesehen.
   - Für die Anlage ist zum aktuellen Zeitpunkt und innerhalb der nächsten Sekunden (konfigurierbar) keine Sperrzeit hinterlegt.
   - Es ist nicht innerhalb der letzten Sekunden eine Anlage aus demselben Gebäude vom Scoring ausgewählt worden. Die genaue Anzahl Sekunden ist konfigurierbar.

Als Rückgabe kann das Scoring die folgenden Informationen liefern:
- Liste der Anlagen, die zugeschaltet werden sollen
- je Anlage eine maximale Laufzeit (wird berechnet aus Speicherbefüllungspotential)

Sobald eine Anlage für das Zuschalten herausgegeben wurde, wird sie nicht mehr im Scoring für das Zuschalten, sondern im Scoring für das Abschalten geführt.

Im Scoring für das Abschalten von Leistung befinden sich alle ZHKW, die für das Zuschalten von Leistung herausgegeben wurden. Für das Abschalten kann z.B. ein sehr einfaches Scoring verwendet: Es wird das BHKW ausgewählt, das als erstes für das Zuschalten herausgegeben wurde.

## Patentansprüche

1. System, um zeitaktuell die Eignung technischer Einheiten eines virtuellen Kraftwerks zum Erbringen von positiver oder negativer Regelleistung zu bestimmen, die
- als virtuelles Kraftwerk zur Erzeugung und/oder zur Speicherung und/oder zum Verbrauch elektrischer Energie örtlich verteilt sind und die
- zum Einspeisen und/oder Entnehmen elektrischer Energie an ein Stromversorgungsnetz angeschlossen sind und die
- zum Steuern ihres Betriebs über eine Kommunikationsverbindung mit einer Steuerzentrale verbunden sind,
wobei das System weiterhin umfasst:
- einen Zustandssignalgeber bei jeder der technischen Einheiten, der darauf eingerichtet ist, in einem regelmäßigen Zeittakt und bei jedem Zustandswechsel der jeweiligen technischen Einheit ein Zustandssignal, das den Zustandswechsel signalisiert und Information über den gegenwärtigen Zustand der technischen Einheit enthält, an die Steuerzentrale zu senden, und durch
- einen Rechner in der Steuerzentrale, der darauf eingerichtet ist, gemäß den Zustandssignalen und mindestens eines Scoring-Kriteriums mindestens zwei der technischen Einheiten auf ihre Eignung zum Erbringen von positiver oder negativer Regelleistung zu vergleichen.

2. System nach dem vorhergehenden Anspruch, **dadurch gekennzeichnet, dass** der Rechner in der Steuerzentrale darauf eingerichtet ist, gemäß den Zustandssignalen und mehrerer gewichteter Scoring-Kriterien mindestens zwei der technischen Einheiten auf ihre Eignung zum Erbringen von positiver oder negativer Regelleistung zu vergleichen.

3. System nach einem der vorhergehenden Ansprüche, **dadurch gekennzeichnet, dass** der Zeittakt konfigurierbar ist.

4. System nach einem der vorhergehenden Ansprüche, **dadurch gekennzeichnet, dass** der Zustandssignalgeber darauf eingerichtet ist, bei jedem Zustandswechsel der jeweiligen technischen Einheit zwischen einem Produktions- oder Verbrauchs-Leistungswert und Null oder zwischen einem solchen Leistungswert und einem anderen solchen Leistungswert ein Zustandssignal, das den Zustandswechsel signalisiert und/oder Information über den gegenwärtigen Zustand der technischen Einheit enthält, an die Steuerzentrale zu senden.

5. System nach einem der vorhergehenden Ansprüche, **dadurch gekennzeichnet, dass** der Rechner in der Steuerzentrale darauf eingerichtet ist, gemäß den Zustandssignalen und mindestens einem Scoring-Kriterium mindestens zwei der technischen Einheiten auf ihre Eignung zum Erbringen von positiver oder negativer Regelleistung zu vergleichen und abhängig vom Ergebnis des Vergleichs anzusteuem.

6. Verfahren, um zeitaktuell die Eignung technischer Einheiten eines virtuellen Kraftwerks zum Erbringen von positiver oder negativer Regelleistung zu bestimmen, die
- als virtuelles Kraftwerk zur Erzeugung und/oder zur Speicherung und/oder zum Verbrauch elektrischer Energie örtlich verteilt sind und die
- zum Einspeisen und/oder Entnehmen elektrischer Energie an ein Stromversorgungsnetz angeschlossen sind und die
- zum Steuern ihres Betriebs über eine Kommunikationsverbindung mit einer Steuerzentrale verbunden sind,
wobei das Verfahren weiterhin umfasst, dass
- ein Zustandssignalgeber bei jeder der technischen Einheiten in einem regelmäßigen Zeittakt und bei jedem Zustandswechsel der jeweiligen technischen Einheit ein Zustandssignal, das den Zustandswechsel signalisiert und Information über den gegenwärtigen Zustand der technischen Einheit enthält, an die Steuerzentrale sendet, und dass
- ein Rechner in der Steuerzentrale gemäß den Zustandssignalen und mindestens eines Scoring-Kriteriums mindestens zwei der technischen Einheiten auf ihre Eignung zum Erbringen von positiver oder negativer Regelleistung vergleicht.

7. Verfahren nach dem vorhergehenden Anspruch, **dadurch gekennzeichnet, dass** der Rechner in der Steuerzentrale gemäß den Zustandssignalen und mehrerer gewichteter Scoring-Kriterien mindestens zwei der technischen Einheiten auf ihre Eignung zum Erbringen von positiver oder negativer Regelleistung vergleicht.

8. Verfahren nach einem der vorhergehenden Ansprüche, **dadurch gekennzeichnet, dass** der Zeittakt konfigurierbar ist.

9. Verfahren nach einem der vorhergehenden Ansprüche, **dadurch gekennzeichnet, dass** der Zustandssignalgeber bei jedem Zustandwechsel der jeweiligen technischen Einheit zwischen einem Produktions- oder Verbrauchs-Leistungswert und Null oder zwischen einem solchen Leistungswert und einem anderen solchen Leistungswert ein Zustandssignal, das den Zustandswechsel signalisiert und/oder Information über den gegenwärtigen Zustand der technischen Einheit enthält, an die Steuerzentrale sendet.

10. Verfahren nach einem der vorhergehenden Ansprüche, **dadurch gekennzeichnet, dass** Rechner in der Steuerzentrale gemäß den Zustandssignalen und mindestens einem Scoring-Kriterium mindestens zwei der technischen Einheiten auf ihre Eignung zum Erbringen von positiver oder negativer Regelleistung vergleicht und abhängig vom Ergebnis des Vergleichs ansteuert.

## Claims

1. System for determining, in an up-to-date manner, the suitability of technical units of a virtual power plant for providing positive or negative operating reserve, which units
- are locally distributed as a virtual power plant for generating and/or storing and/or consuming electrical energy, and which units
- are connected to a power supply network in order to feed in and/or withdraw electrical energy, and which units
- are linked to a control centre via a communication link in order for the operation of said units to be controlled,
wherein the system further comprises:
- a state signal generator at each of the technical units, which is designed to transmit to the control centre, at regular time intervals and upon each state change of the relevant technical unit, a state signal which signals the state change and contains information about the current state of the technical unit, and
- a computer in the control centre, which computer is designed to compare, based on the state signals and at least one scoring criterion, at least two of the technical units in terms of the suitability thereof for providing positive or negative operating reserve.

2. System according to the preceding claim, **characterised in that** the computer in the control centre is designed to compare, based on the state signals and a plurality of weighted scoring criteria, at least two of the technical units in terms of the suitability thereof for providing positive or negative operating reserve.

3. System according to either of the preceding claims, **characterised in that** the time interval is configurable.

4. System according to any of the preceding claims, **characterised in that** the state signal generator is designed to transmit to the control centre, upon each state change of the relevant technical unit between a production or consumption power value and zero or between such a power value and another such power value, a state signal which signals the state change and/or contains information about the current state of the technical unit.

5. System according to any of the preceding claims, **characterised in that** the computer in the control centre is designed to compare, based on the state signals and at least one scoring criterion, at least two of the technical units in terms of the suitability thereof for providing positive or negative operating reserve and to control said units depending on the result of this comparison.

6. Method for determining, in an up-to-date manner, the suitability of technical units of a virtual power plant for providing positive or negative operating reserve, which units
- are locally distributed as a virtual power plant for generating and/or storing and/or consuming electrical energy, and which units
- are connected to a power supply network in order to feed in and/or withdraw electrical energy, and which units
- are linked to a control centre via a communication link in order for the operation of said units to be controlled,
wherein the method further comprises the steps of:
- a state signal generator at each of the technical units transmitting to the control centre, at regular time intervals and upon each state change of the relevant technical unit, a state signal which signals the state change and contains information about the current state of the technical unit, and
- a computer in the control centre comparing, based on the state signals and at least one scoring criterion, at least two of the technical units in terms of the suitability thereof for providing positive or negative operating reserve.

7. Method according to the preceding claim, **characterised in that** the computer in the control centre compares, based on the state signals and a plurality of weighted scoring criteria, at least two of the technical units in terms of the suitability thereof for providing positive or negative operating reserve.

8. Method according to any of the preceding claims, **characterised in that** the time interval is configurable.

9. Method according to any of the preceding claims, **characterised in that** the state signal generator transmits to the control centre, upon each state change of the relevant technical unit between a production or consumption power value and zero or between such a power value and another such power value, a state signal which signals the state change and/or contains information about the current state of the technical unit.

10. Method according to any of the preceding claims, **characterised in that** the computer in the control centre compares, based on the state signals and at least one scoring criterion, at least two of the technical units in terms of the suitability thereof for providing positive or negative operating reserve and controls said units depending on the result of this comparison.

## Revendications

1. Système pour déterminer en temps réel l'aptitude d'unités techniques d'une centrale électrique virtuelle pour fournir une puissance de régulation positive ou négative, qui
- sont réparties localement en tant que centrale électrique virtuelle pour la génération et/ou pour l'accumulation et/ou pour la consommation d'énergie électrique et qui
- sont raccordées à un réseau électrique pour l'alimentation et/ou le prélèvement d'énergie électrique et qui
- sont reliées à une centrale de commande par le biais d'une liaison de communication pour la commande de leur fonctionnement,
dans lequel le système comprend en outre :
- un transmetteur de signal d'état pour chacune des unités techniques, qui est aménagé pour envoyer à un rythme régulier et à chaque changement d'état de l'unité technique respective, un signal d'état, qui signale le changement d'état et contient une information sur l'état actuel de l'unité technique, à la centrale de commande, et par
- un ordinateur dans la centrale de commande, qui est aménagé, conformément aux signaux d'état et à au moins un critère d'évaluation, pour comparer au moins deux des unités techniques quant à leur aptitude pour fournir une puissance de régulation positive ou négative.

2. Système selon la revendication précédente, **caractérisé en ce que** l'ordinateur dans la centrale de commande est aménagé, conformément aux signaux d'état et à plusieurs critères d'évaluation pondérés, pour comparer au moins deux des unités techniques quant à leur aptitude pour fournir une puissance de régulation positive ou négative.

3. Système selon l'une quelconque des revendications précédentes, **caractérisé en ce que** le rythme est configurable.

4. Système selon l'une quelconque des revendications précédentes, **caractérisé en ce que** le transmetteur de signal d'état est aménagé pour envoyer à chaque changement d'état de l'unité technique respective entre une valeur de puissance de production ou de consommation et zéro ou entre une telle valeur de puissance et une autre telle valeur de puissance, un signal d'état, qui signale le changement d'état et/ou contient une information sur l'état actuel de l'unité technique, à la centrale de commande.

5. Système selon l'une quelconque des revendications précédentes, **caractérisé en ce que** l'ordinateur dans la centrale de commande est aménagé, conformément aux signaux d'état et à au moins un critère d'évaluation, pour comparer au moins deux des unités techniques quant à leur aptitude pour fournir une puissance de régulation positive ou négative et à les piloter en fonction du résultat de la comparaison.

6. Procédé pour déterminer en temps réel l'aptitude d'unités techniques d'une centrale électrique virtuelle pour fournir une puissance de régulation positive ou négative, qui
- sont réparties localement en tant que centrale électrique virtuelle pour la génération et/ou pour l'accumulation et/ou pour la consommation d'énergie électrique et qui
- sont raccordées à un réseau électrique pour l'alimentation et/ou le prélèvement d'énergie électrique et qui
- sont reliées à une centrale de commande par le biais d'une liaison de communication pour la commande de leur fonctionnement,
dans lequel le procédé comprend en outre le fait que
- un transmetteur de signal d'état pour chacune des unités techniques envoie à un rythme régulier et à chaque changement d'état de l'unité technique respective, un signal d'état qui signale le changement d'état et contient une information sur l'état actuel de l'unité technique, à la centrale de commande, et que
- un ordinateur dans la centrale de commande compare, conformément aux signaux d'état et à au moins un critère d'évaluation, au moins deux des unités techniques quant à leur aptitude pour fournir une puissance de régulation positive ou négative.

7. Procédé selon la revendication précédente, **caractérisé en ce que** l'ordinateur dans la centrale de commande compare, conformément aux signaux d'état et à plusieurs critères d'évaluation pondérés au moins deux des unités techniques quant à leur aptitude pour fournir une puissance de régulation positive ou négative.

8. Procédé selon l'une quelconque des revendications précédentes, **caractérisé en ce que** le rythme est configurable.

9. Procédé selon l'une quelconque des revendications précédentes, **caractérisé en ce que** le transmetteur de signal d'état envoie à chaque changement d'état de l'unité technique respective entre une valeur de puissance de production ou de consommation et zéro ou entre une telle valeur de puissance et une autre telle valeur de puissance, un signal d'état, qui signale le changement d'état et/ou contient une information sur l'état actuel de l'unité technique, à la centrale de commande.

10. Procédé selon l'une quelconque des revendications précédentes, **caractérisé en ce que** l'ordinateur dans la centrale de commande compare, conformément aux signaux d'état et à au moins un critère d'évaluation, au moins deux des unités techniques quant à leur aptitude pour fournir une puissance de régulation positive ou négative et les pilote en fonction du résultat de la comparaison.
